# EUROPÄISCHE PATENTSCHRIFT

(11) **EP 0 820 924 B1**
(45) Veröffentlichungstag und Bekanntmachung des Hinweises auf die Patenterteilung: **27.11.2002**
(21) Anmeldenummer: 97110695.0
(22) Anmeldetag: 01.07.1997
(51) Int. Cl.: B62K 11/10, B62J 17/00

(54) **Fahrzeugrahmen mit Durchstieg, insbesondere für ein Zweirad**
Vehicle frame with step through section,especially for a two wheeler
Châssis pour véhicule avec montée aisée, notamment pour un véhicule à deux roues

(30) Priorität: 24.07.1996 DE 19629879
(43) Veröffentlichungstag der Anmeldung: 28.01.1998
(73) Patentinhaber: Bayerische Motoren Werke Aktiengesellschaft, 80788 München (DE)
(72) Erfinder: Müller, Helmut, 84513 Töging (DE); Theobald, Markus, 80804 München (DE); Thoma, Rainer, 81371 München (DE)

(56) Entgegenhaltungen:
- WO-A-85/00568
- WO-A-95/09760
- DE-A- 19 505 448
- DE-U- 29 614 125
- JP-A- 49 019 539
- US-A- 4 973 082
- "Nur zwei Räder, dafür aber den doppelten Nutzen" AUTO TECHNIK ZUKUNFT, Nr. 25, 1992, Seiten 4-5, XP002118647
- PATENT ABSTRACTS OF JAPAN vol. 095, no. 008, 29. September 1995 (1995-09-29) & JP 07 112681 A (HONDA MOTOR CO LTD), 2. Mai 1995 (1995-05-02) & JP 07 112681 A (HONDA) 2. Mai 1995 (1995-05-02)
- "Das Rollermobil von BMW" AUTO BILD,10. August 1996 (1996-08-10), Seiten 8-9, XP002118648
- PATENT ABSTRACTS OF JAPAN vol. 017, no. 598 (M-1504), 2. November 1993 (1993-11-02) & JP 05 178251 A (HONDA MOTOR CO LTD), 20. Juli 1993 (1993-07-20) & JP 05 178251 A (HONDA) 20. Juli 1993 (1993-07-20)

## Beschreibung

Die Erfindung betrifft einen Fahrzeugrahmen mit Durchstieg, insbesondere für ein Zweirad, gemäß dem Oberbegriff des Patentanspruches 1.

Aus "Nur zwei Räder, dafür aber den doppelten Nutzen" BMW Design Studie C1, AUTO TECHNIK ZUKUNFT, Nr. 25, 1992, Seiten 4-5, XP002118647 ist eine Designstudie eines Zweirads bekannt, das einen Rohrrahmen und einen sich vom Vorderrad über den Kopf des Fahrers nach hinten erstreckenden "Schutzkäfig" aufweist. Der Schutzkäfig ist seitlich auf beiden Seiten offen.

Dieses Dokument beinhalter auch die Merkmale des Oberbegriffs des ersten Anspruchs.

Das deutsche Gebrauchsmuster G 94 10 306.2 beschreibt einen Motorroller mit zusammenfaltbarer Regenschutzeinrichtung. Zum Schutz des Fahrers eines Motorrollers mit Triebsatzschwinge und Durchstieg besitzt dieser eine zusammenfaltbare Regenschutzeinrichtung. Wenn diese entfaltet ist, erstreckt sie sich von einem Bereich hinter dem Fahrer, über diesen hinweg, bis vor ihn. Dort besteht sie aus einer Windschutzscheibe, die an einer Lenkeinrichtung angebracht ist.

Ein solcher Motorroller hat den Nachteil, daß das gesamte Fahrzeug sehr wenig verwindungssteif ist. Das betrifft den Fahrzeugrahmen und die Regenschutzeinrichtung. Dadurch können fahrdynamische Probleme, zum Beispiel pendeln oder flattern, auftreten. Außerdem besitzt ein solches Fahrzeug eine erhöhte Windempflindlichkeit. Im Falle eines Frontalaufpralls des Motorrollers auf ein Hindernis kann dieser nur sehr wenig Energie abbauen, da der Fahrzeugrahmen im Durchstieg sehr instabil ist, sich dort also verformt und nur sehr geringe Kräfte dabei abbaut. Für einen solchen Fall sind desweiteren keine Sicherheitseinrichtungen für den Fahrer vorgesehen.

Demgegenüber ist es Aufgabe dieser Erfindung, ein Fahrzeug mit Durchstieg, insbesondere ein Zweirad, bereitzustellen, dessen Fahrzeugrahmen im Falle eines Frontaufpralls auf ein Hindernis große Kräfte abbaut und sich dabei nur wenig verformt und das zusätzlich den innerhalb des Fahrzeugrahmens verbleibenden Fahrer durch weitere Sicherheitseinrichtungen schützt.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist ein Fahrzeugrahmen mit Durchstieg so gestaltet, daß mindestens ein, sich im wesentlichen in Fahrzeuglängsrichtung erstreckendes, tragendes Rahmenhauptelement, von hinten unten, nahe dem Motor, nach vorne oben, nahe der Lenkeinrichtung, verläuft, und daß auf jeder Seite unterhalb des Rahmenhauptelements mindestens ein, mindestens abschnittsweise im wesentlichen parallel zur Aufstandsfläche des Fahrzeugs verlaufendes, weiteres Rahmenelement vorgesehen ist, das eine Aufstellfläche für den jeweiligen Fuß des Fahrers bildet.

Durch dieses Rahmenhauptelement wird bei direkter Verbindung zwischen Vorderrad- und Hinterradführung eine hohe Rahmensteifigkeit erreicht.

Bei einer bevorzugten Ausführung der Erfindung ist die Hinterradführung mit dem Motor federnd am Fahrzeugrahmen angebracht. Eine solche Hinterradschwingengestaltung wird auch als Triebsatzschwinge bezeichnet. Sind dazu noch als Rahmenhauptelemente zwei, jeweils links und rechts seitlich der Fahrzeugmittenebene parallel verlaufende Rahmenhauptrohre vorgesehen, so können vorteilhafterweise zwischen den Rahmenhauptrohren weitere Vorderrad- bzw. Hinterradführungselemente vom Kraftverlauf her günstig auf einfache Weise untergebracht werden. Vorne befindet sich bei einer weiteren bevorzugten Ausführung der Erfindung mindestens ein Aufnahmekörper für die Lenkeinrichtung zwischen den Rahmenhauptrohren. Dieser stellt eine einfach aufgebaute Verbindung her.

Wird zusätzlich noch, wie in einer vorteilhaften Ausführung der Erfindung, das Vorderrad unter anderem durch mindestens einen an dem Rahmenhauptelement angebrachten, um eine Fahrzeugquerachse schwenkbaren Längslenker geführt, so kann die Lage der Rahmenhauptrohre so gewählt werden, daß die Lagerachse des Längslenkers zwischen den Rahmenhauptrohren zu einer kinematischen Anordnung führt, die beim Bremsen des Fahrzeugs eine nur minimale Einfederung des Fahrzeugs zuläßt. Auf diese Weise kann ein Bremsnickausgleich einfach erreicht werden. Sehr günstige Fahreigenschaften ergeben sich, wenn die beiden Rahmenhauptrohre von vorne oben, etwa in Höhe des Fahrzeuggesamtschwerpunktes, nach hinten unten, deutlich unterhalb der Sitzhöhe des Fahrers, geführt sind.

Die Lagerung des Längslenkers zwischen den beiden Rahmenhauptrohren erhöht die Fahrzeugsteifigkeit, besonders in seitlicher Richtung, und insbesondere die Steifigkeit der Vorderradführung erheblich. Fahrzeugeigenschwingungen, wie pendeln und flattern, werden dadurch zum großen Teil unterbunden. Wird der Längslenker in den Rahmenhauptrohren direkt gelagert, so entsteht eine wirkungsvolle, einfache Vorderradaufhängung mit wenig Bauteilen.

Bei einer weiteren vorteilhaften Ausführung der Erfindung sind zusätzliche Rahmenelemente vorgesehen, die im wesentlichen vom mittleren und/oder vom hinteren Bereich des Rahmenhauptelements ausgehend, schräg nach hinten oben verlaufen und mit dem Rahmenhauptelement und/oder den weiteren Rahmenelementen verbunden sind, um mindestens die Sitzeinrichtung zu tragen.

Das hat den Vorteil, daß der Durchstieg beim Fahrzeugrahmen ergonomisch günstig ausgebildet ist und gleichzeitig eine hohe Steifigkeit des Fahrzeugrahmens erreicht wird. Das ergibt für den Fahrer eine Sicherheit in der Handhabung beim Auf- bzw. Absteigen, Anhalten oder beim Anlegen des Sicherheitsgurtes. Damit verbunden ist ein hoher Sitzkomfort, sowie hoher Einstiegs- und Ausstiegskomfort.

Bei einer weiteren vorteilhaften Ausführung der Erfindung besteht die Sitzeinrichtung aus einem Sitzrahmenteil, das die zusätzlichen Rahmenteile im wesentlichen horizontal verbindet, aus einer Sitzrampe, die mit den zusätzlichen Rahmenteilen und/oder dem Sitzrahmenteil verbunden ist und sich im Schrittbereich des Fahrers nach oben erstreckt und aus einem Sitz.

Eine Sitzeinrichtung mit einer rahmenfesten Sitzrampe, an der sich der Sitz, zum Beispiel als Sitzschale ausgeführt, im Falle eines Frontalaufpralls abstützt, verhindert vorteilhafterweise die Beckenvorverlagerung des Fahrers und hält diesen im Beckenbereich auf dem Sitz. Dies ist insbesondere bei der Verwendung von Sicherheitsgurten für den Fahrer vorteilhaft, da dadurch ein Durchtauchen des Fahrers unter dem Sicherheitsgurt im Beckenbereich durch die gezielte Abstützung verhindert wird. Desweiteren erhöht eine rahmenfeste Sitzrampe die Gesamtsteifigkeit des Fahrzeugrahmens.

Bei einer weiteren bevorzugten Ausführung der Erfindung ist am Rahmenhauptelement oder an den vom hinteren Bereich des Rahmenhauptelementes ausgehenden zusätzlichen Rahmenelementen oder an deren Verbindung mit dem Rahmenhauptelement und/oder den weiteren Rahmenelementen die gefederte Hinterradführung angebracht.

Eine solche Anbringung der gefederten Hinterradführung, zum Beispiel der Triebsatzschwinge, ist einfach ausgeführt und preiswert herzustellen. Der Freiraum zwischen den Rahmenelementen zum Einbau der Hinterradführung ermöglicht es, diese mit einer breiten Lagerbasis auszuführen. Im hinteren Bereich, von der Fahrzeugrahmenmitte zur jeweiligen Seite hin auseinanderführende Rahmenhauptrohre ermöglichen vorteilhafterweise einen günstigen Kraftfluß von der Vorderradführung zur Hinterradführung.

Bei einer weiteren vorteilhaften Ausführung der Erfindung befindet sich über dem Vorderrad eine Deformationseinrichtung, die sich mindestens an dem Rahmenhauptelement abstützt. Dabei können die weiteren Rahmenelemente hinter dem Vorderrad im wesentlichen nach vorne oben gerichtet verlaufen und sich bis über die Deformationseinrichtung hinaus erstrecken. So ist es auf einfache Weise möglich, daß sich die Deformationseinrichtung an den weiteren Rahmenelementen abstützt und die weiteren Rahmenelemente mit dem Rahmenhauptelement direkt oder über den Aufnahmekörper für die Lenkeinrichtung und/oder miteinander verbunden sind.

Die Deformationseinrichtung über dem Vorderrad kann vorteilhafterweise große Aufprallkräfte abbauen und/oder in den Fahrzeugrahmen einleiten. Sehr günstig ist es dabei, wenn die Deformationseinrichtung eine breite Abstützbasis besitzt. Führen die zwei Rahmenhauptrohre von der Fahrzeugrahmenmitte im vorderen Bereich des Fahrzeugrahmens nach außen, oder schließen sie an eine etwa der Fahrzeugbreite entsprechende Querstrebe an, ist diese breite Abstützbasis für das Deformationselement gegeben. Gleichzeitig kann ergonomisch günstig links und rechts neben den Rahmenhauptrohren ein Freiraum für die Füße des Fahrers gestaltet werden. Liegt die Deformationseinrichtung mindestens in Höhe des Fahrzeugschwerpunkts und in einer Anordnung, die den Erstkontaktpunkt in dieser Höhe mit einem Hindernis zuläßt, so wird vorteilhafterweise bei einem Aufprall ein Überschlagen des Fahrzeugs verhindert. Sind die weiteren Rahmenelemente über der Deformationseinrichtung miteinander verbunden, nimmt die Stabilität des Fahrzeugrahmens vorteilhafterweise noch mehr zu.

Bei einer weiteren vorteilhaften Ausführung der Erfindung wird der Überlebensraum für den Fahrer dadurch aufrechterhalten, daß die sich vor, über und hinter dem Fahrer erstreckende Schutzeinrichtung hinter dem Fahrer an den zusätzlichen Rahmenelementen und/oder an dem Sitzrahmenteil und/oder an deren Verbindung, zum Beispiel einem Knotenelement, und vor dem Fahrer an den weiteren Rahmenelementen und/oder an deren Verbindung und/oder am Rahmenhauptelement angebracht ist. Sie besteht aus mindestens zwei, auf jeweils einer Seite des Fahrzeugs verlaufenden, untereinander verbundenen Holmen. Dabei ist es weiter vorteilhaft, wenn an jedem Holm jeweils ein Schulterschutzbügel angebracht ist, der die Kontur der Schutzeinrichtung zur jeweiligen Seite hin überragt. Außerdem ist vorteilhafterweise an jedem Holm und/oder an den zusätzlichen Rahmenelementen und/oder an dem Sitzrahmenteil und/oder am Knotenelement zur Seite hin ein Beckenschutzbügel angebracht, der ebenfalls die Kontur mindestens der Schutzeinrichtung zur Seite hin überragt. Diese Schutzbügel schützen den Fahrer zur Seite hin. Dabei ist es vorteilhaft, wenn der Sitz zusätzlich an der Schutzeinrichtung befestigt ist.

Um zu verhindern, daß der Fahrer aus dem Überlebensraum herausfällt, ist für diesen in einer weiteren bevorzugten Ausführung der Erfindung eine Sicherheitsgurteinrichtung vorhanden, die am Fahrzeugrahmen und/oder am Sitz befestigt ist. Diese fixiert den Fahrer vorteilhafterweise am Sitz bzw. am Fahrzeugrahmen besonders günstig, wenn sie mit einer automatischen Gurtaufroll- und/oder - blockiereinrichtung ausgestattet ist. So kann sich der Fahrer im normalen Fahrbetrieb relativ zum Sitz und zum Fahrzeugrahmen bewegen, während er unter Bedingungen, die bei einem Aufprall oder bei einem Sturz auftreten, am Fahrzeug fixiert wird. Soll die Sicherheitsgurteinrichtung mit einer Hand angelegt werden können, so ist es günstig, wenn mindestens ein sogenannter Dreipunktgurt mit Gurtaufroll- und/oder -blockiereinrichtung verwendet wird. Der Forderung, den Fahrer bei möglicher Einhandbedienung der Sicherheitsgurteinrichtung über mindestens vier Punkte am Fahrzeugrahmen festzulegen, wird entsprochen, wenn zwei Dreipunktgurte, jeweils einer auf einer Seite des Fahrzeugsitzes mit einem Gurtschloß auf jeweils der anderen Seite angebracht sind. Es ist aber auch möglich einen Dreipunktgurt mit einem Zweipunktgurt, einem sogenannten Schrägschultergurt, zu kombinieren.

Für den Kraftverlauf wirkt sich besonders günstig aus, wenn die Sicherheitsgurteinrichtung eine Umlenkeinrichtung für mindestens ein Gurtband besitzt, die an der Schutzeinrichtung angebracht ist und die sich bei verformender Belastung an dieser abstützt. Dadurch wird vorteilhafterweise die Umlenkeinrichtung erheblich versteift.

Dabei ist bei einer weiteren vorteilhaften Ausführung der Erfindung die Schutzeinrichtung mindestens zweigeteilt, in ein fest mit dem Fahrzeugrahmen verbundenes Rückenteil hinter dem Fahrer und ein am Fahrzeugrahmen lösbar befestigtes Oberteil, mindestens über und vor dem Fahrer. Dadurch können vorteilhafterweise die jeweiligen Teile der Schutzeinrichtung auf einfache Weise der unterschiedlichen Beanspruchung entsprechend ausgebildet werden.

Die Verbindung zwischen den beiden Teilen der Schutzeinrichtung ist sehr einfach aufgebaut, wenn das Oberteil durch die Umlenkeinrichtung mit dem Rückenteil formschlüssig und durch vorne am Fahrzeugrahmen angebrachte Klemmschellen mit dem Fahrzeugrahmen form- und/oder reibschlüssig verbunden ist.

Bei einer weiteren bevorzugten Ausführung der Erfindung ist mindestens im Bereich vor dem Fahrer, mindestens zwischen den beiden Holmen der Schutzeinrichtung, eine Windschutzscheibe angebracht. Diese Windschutzscheibe schützt den Fahrer vorteilhafterweise sowohl vor Wettereinflüssen, als auch vor in den Überlebensraum eindringenden Gegenständen.

Bei weiteren vorteilhaften Ausführungen der Erfindung sind an den zusätzlichen Rahmenelementen und/oder an der Schutzeinrichtung und/oder an der Sitzeinrichtung und/oder an dem Knotenelement hinter dem Fahrer sich nach hinten über das Hinterrad erstreckende ergänzende Rahmenteile angebracht. An diesen ergänzenden Rahmenteilen ist eine Hinterradverkleidung befestigt, in der ein Stauraum ausgebildet ist. Desweiteren kann diese in ihrem oberen Bereich als Sitz für einen Sozius ausgebildet sein. Das hat den Vorteil, daß Sozius und Fahrer durch die zwischen ihnen liegende Schutzeinrichtung getrennt sind. Sie können gegenseitig auf sich keine Kräfte ausüben. Im Brustbereich kann für den Sozius an der Schutzeinrichtung eine definierte Polsterung zur Energieaufnahme vorgesehen werden. Die Sicherheit wird für den Sozius dadurch erhöht, daß er über das Rückenteil der Schutzeinrichtung abgestützt wird und so an der Fahrzeugverzögerung teilnimmt, ohne Kräfte auf den Fahrer auszuüben. Wenn an der Hinterradverkleidung oder an den ergänzenden Rahmenteilen mindestens ein abnehmbarer Stauraum befestigbar ist, so hat das den Vorteil, daß der Soziussitzplatz auch zum Transportieren von Gepäck verwendet werden kann.

Um die Oberschenkelspreizung für den Sozius möglichst gering zu halten, ist es von Vorteil, wenn das Rückenteil der Schutzeinrichtung im Schrittbereich des Sozius möglichst schmal ausgeführt ist, indem die Holme des Rückenteils zur Längsmittenebene des Fahrzeugrahmens hin mindestens im Bereich des Soziussitzes eingezogen sind.

Bei einer weiteren bevorzugten Ausführung der Erfindung bestehen die Rahmenelemente aus Strangprofilen, zum Beispiel aus Leichtmetallstrangpreßprofilen. Diese werden zumindest teilweise durch Knotenelemente, zum Beispiel Gußknoten, zusammengehalten, wobei zum Beispiel der Aufnahmekörper für die Lenkeinrichtung und/oder die Sitzrampe und/oder die Verbindungen der Rahmenelemente als Knotenelemente ausgebildet sind. So ist der Fahrzeugrahmen vorteilhafterweise besonders einfach und preiswert herzustellen. Außerdem ist dies eine gewichtssparende Konstruktion, die einfach montierbar ist, selbst bei einer komplizierten Rahmenstruktur.

Bevorzugte Ausführungsbeispiele der Erfindung sind in der nachfolgenden Beschreibung mit der zugehörigen Zeichnung dargestellt. Es zeigen
- Figur 1: eine perspektivische Gesamtansicht eines verkleideten Zweirades mit einem Fahrzeugrahmen entsprechend der Erfindung und einem Fahrer mit angelegtem Sicherheitsgurtsystem,
- Figur 2: eine perspektivische Ansicht des Fahrzeugrahmens und
- Figur 3: eine Seitenansicht eines erfindungsgemäßen Zweirads ohne Verkleidung mit angedeutet gezeichnetem Fahrer und Sozius.

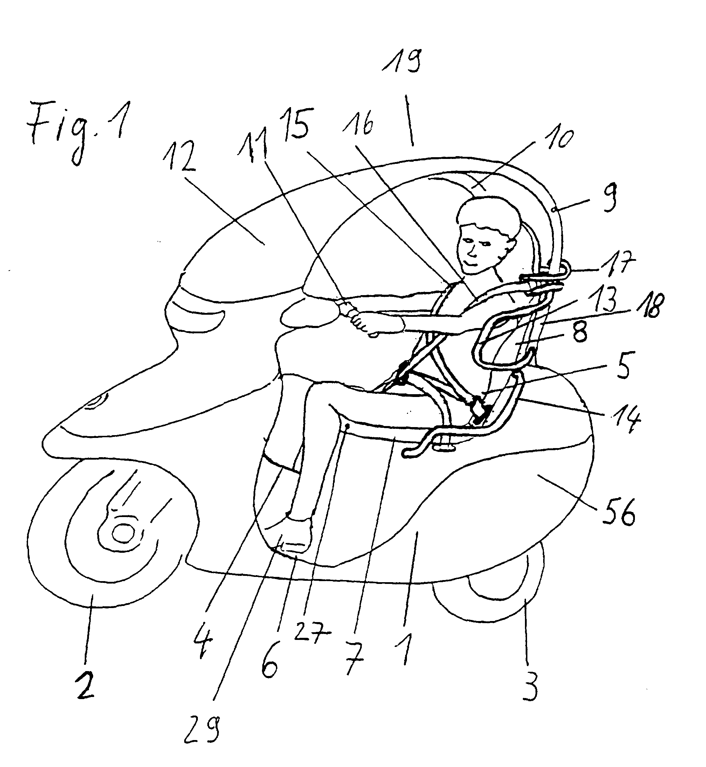

Figur 1 zeigt ein verkleidetes Zweirad mit einem Fahrzeugrahmen zum Durchsteigen entsprechend der Erfindung. Aufgrund einer Verkleidung 1 sind nur einige Teile des Fahrzeugrahmens sichtbar. Die Verkleidung 1 erstreckt sich im wesentlichen über den unteren Bereich des Zweirades von vorne über dem Vorderrad 2 nach hinten über das Hinterrad 3. Der Durchstieg 4 des Fahrzeugrahmens ist ebenfalls verkleidet. Vom Fahrzeugrahmen sichtbar ist eine Schutzeinrichtung, die so gestaltet ist, daß sich für den Fahrer 5 ein seitlich offener, den Durchstieg ermöglichender Käfig ergibt. Dieser wird im wesentlichen begrenzt von einer Aufstellfläche 6 für den jeweiligen Fuß 29 des Fahrers 5, die nach oben in den Durchstieg 4 übergeht und einen Sitz 7 für den Fahrer 5, der an einer nicht sichtbaren Sitzeinrichtung befestigt ist und als Sitzschale mit einem Rückenteil 8 ausgebildet ist, das den Käfig für den Fahrer 5 nach hinten begrenzt.

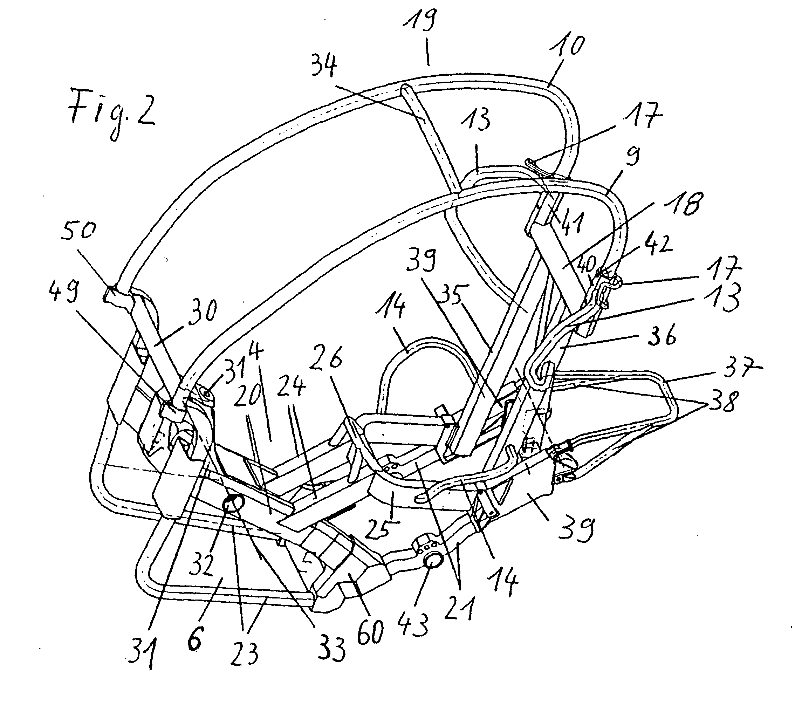

Desweiteren verlaufen hinter dem Rückenteil 8 der Sitzschale untereinander verbundene Holme 9, 10, (35, 36, Figur 2) einer sich vor, über und hinter dem Fahrer erstreckenden Schutzeinrichtung, jeweils auf einer Seite des Zweirades über den Fahrer 5 hinweg nach vorne, vor eine Lenkeinrichtung 11. Im Bereich vor dem Fahrer 5 ist zwischen den beiden Holmen 9, 10 eine Windschutzscheibe 12 angebracht.

An den Holmen 9, 10, 35, 36 ist zur jeweiligen Seite hin ein die Kontur mindestens der Schutzeinrichtung hin überragender Schulterschutzbügel 13 angebracht. Ein ebenfalls die Kontur mindestens der Schutzeinrichtung zur Seite hin überragender Beckenschutzbügel 14 ist an jedem Holm 35, 36 und/oder an in dieser Figur nicht sichtbaren zusätzlichen Rahmenelementen 21, 24 und/oder an einem in dieser Figur nicht sichtbaren Sitzrahmenteil 25 und/oder an einem ebenfalls in dieser Figur nicht sichtbaren Knotenelement 39 befestigt. Zusätzlich ist der Sitz 7 mit seinem Rückenteil 8 an der Schutzeinrichtung befestigt. Dadurch wird eine Stabilität erreicht, daß für den Fahrer 5 eine Sicherheitsgurteinrichtung vorgesehen werden kann, die am Fahrzeugrahmen und/oder am Sitz 7 mit Rückenteil 8 befestigt ist. Die Sicherheitsgurteinrichtung besteht aus zwei sogenannten Dreipunktgurten für den Fahrer 5, von denen jeweils einer auf einer Seite des Zweirades angebracht und auf der anderen Seite des Zweirads an diesem über ein Gurtschloß festlegbar ist. So wird im Falle eines Unfalles der Fahrer 5 durch den Fahrzeugrahmen geschützt, unter anderem, weil er durch die Sicherheitsgurteinrichtung am Sitz 7 mit Rückenteil 8 über mindestens vier Punkte im Fahrzeug, mindestens zwei in Beckennähe und zwei in Schulternähe, fixiert ist.

Im normalen Fahrbetrieb kann sich der Fahrer 5, aufgrund der Verwendung von nicht sichtbaren automatischen Sicherheitsgurtaufroll- und -blockiereinrichtungen für die beiden sogenannten Dreipunktgurte, im wesentlichen frei auf dem Sitz 7 bewegen, was zum sicheren Steuern eines Zweirades beiträgt und durch diese Sicherheitsgurteinrichtung ermöglicht wird. Ein weiterer Vorteil ist, daß die beiden Dreipunktgurte nacheinander angelegt werden können. Das ermöglicht eine Einhandbedienung der Sicherheitsgurteinrichtung, wobei beim Anlegen der sogenannten Dreipunktgurte mit einer Hand, eine andere Hand des Fahrers 5 zum Beispiel an der Lenkeinrichtung 11 verbleiben kann, um das Zweirad im Gleichgewicht zu halten.

Zum Umlenken der beiden Sicherheitsgurtbänder 15 ,16 ist in Schulternähe des Fahrers 5 eine Umlenkeinrichtung vorgesehen, die aus jeweils einem Umlenkbügel 17 für jedes der Sicherheitsgurtbänder 15, 16 besteht. Jeder Umlenkbügel 17 ist an der Schutzeinrichtung hinter dem Fahrer 5 angebracht und stützt sich bei verformender Belastung an dieser ab.

Desweiteren ist die Schutzeinrichtung zweigeteilt, in ein fest mit dem Fahrzeugrahmen verbundenes Rückenteil 18 hinter dem Fahrer 5 und ein am Fahrzeugrahmen lösbar befestigtes Oberteil 19, mindestens über und vor dem Fahrer 5. Das Oberteil 19 wird durch die Umlenkbügel 17 mit dem Rückenteil 18 formschlüssig und durch vorne am Fahrzeugrahmen angebrachte, nicht sichtbare Klemmschellen mit diesem reibschlüssig verbunden. Die Verbindung zwischen Rückenteil 18 und Oberteil 19 der Schutzeinrichtung wird dadurch erreicht, daß beide ineinandergesteckt sind und jeder Umlenkbügel 17 mit einem Ende in eine Bohrung durch Oberteil 19 und Rückenteil 18 eingesteckt ist und mit seinem anderen Ende durch Schrauben mit dem Rückenteil 18 verbunden ist. Bei verformender Belastung legt sich der Umlenkbügel 17 an der Schutzeinrichtung an, wodurch eine erhebliche Versteifung erreicht wird.

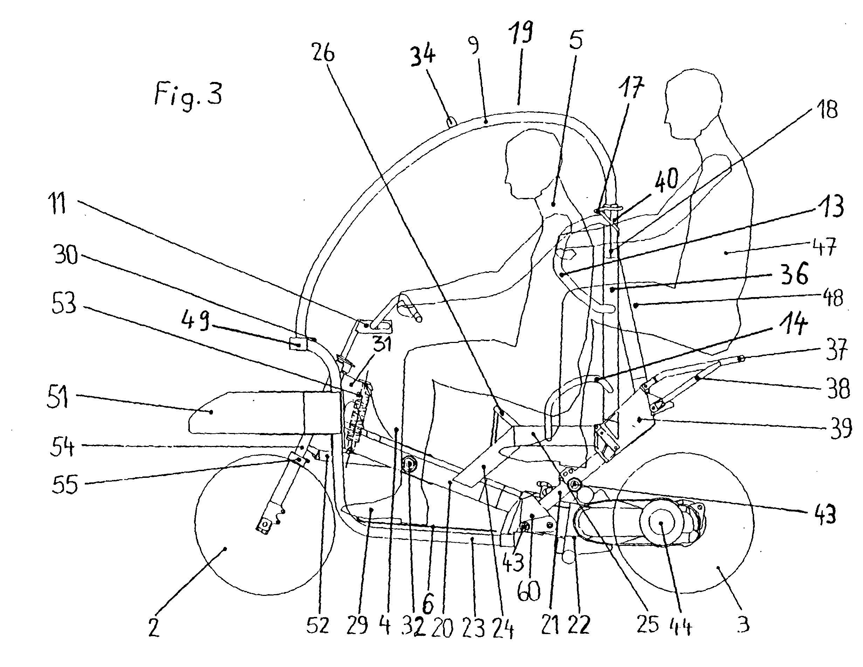

Figur 2 zeigt einen Teil des Fahrzeugrahmens ohne Verkleidung 1. Zwei, jeweils links und rechts seitlich einer Fahrzeugmittenebene parallel verlaufende Rahmenhauptrohre 20 bilden ein Rahmenhauptelement, das im wesentlichen in Fahrzeuglängsrichtung von hinten unten, nahe einem Motor 22 (Figur 3), nach vorne oben, nahe der Lenkeinrichtung 11 (Figur 1) verläuft. Die beiden Rahmenhauptrohre 20 laufen vorne und hinten zur Seite hin auseinander und sind an ihren Enden mit weiteren Rahmenelementen 23 und zusätzlichen Rahmenelementen 21 verbunden. Die zusätzlichen Rahmenelemente 21, 24, die im wesentlichen vom mittleren und vom hinteren Bereich der Rahmenhauptrohre 20 ausgehen, verlaufen schräg nach hinten oben, um eine Sitzeinrichtung zu tragen. Die Sitzeinrichtung besteht aus einem Sitzrahmenteil 25, das die zusätzlichen Rahmenelemente 21, 24 im wesentlichen horizontal verbindet, aus einer Sitzrampe 26, die mit den zusätzlichen Rahmenelementen 24 und/oder dem Sitzrahmenteil 25 verbunden ist und sich im Schrittbereich des Fahrers 5 nach oben erstreckt. An dieser Sitzeinrichtung ist der hier nicht gezeichnete Sitz 7 angebracht. Er besitzt eine nach oben gerichtete Wölbung 27 (Figur 1) für die Sitzrampe 26, was bewirkt, daß eine Vorverlagerung des Fahrers 5 im Falle eines Frontalaufpralls im Zusammenwirken mit der Sicherheitsgurteinrichtung verhindert wird.

Auf jeder Seite unterhalb der beiden Rahmenhauptrohre 20 verläuft, mindestens abschnittsweise im wesentlichen parallel zur Aufstandsfläche des Fahrzeuges, jeweils ein weiteres Rahmenelement 23 und bildet eine Aufstellfläche 6 für den jeweiligen Fuß 29 (Figur 1) des Fahrers 5. Aufgrund der schräg verlaufenden Rahmenhauptrohre 20 und des Verlaufs der zusätzlichen Rahmenelemente 24, die etwa in der Mitte der Rahmenhauptrohre 20 mit diesen verbunden sind, wird das Durchsteigen durch den Durchstieg 4 für den Fahrer 5 ermöglicht.

Die weiteren Rahmenelemente 23 verlaufen von der Aufstellfläche 6 für den jeweiligen Fuß 29 des Fahrers 5 nach vorne oben und sind dort in Höhe des Beginns der Schutzeinrichtung für den Fahrer 5 miteinander verbunden. Außer durch diese Verbindung 30 sind die weiteren Rahmenelemente 23 noch über die nach innen eingezogenen Rahmenhauptrohre 20 an einen Aufnahmekörper 31 für die Lenkeinrichtung 11 angebunden. Der Aufnahmekörper 31 für die Lenkeinrichtung 11 verbindet auch die beiden Rahmenhauptrohre 20 im vorderen Bereich des Fahrzeugrahmens. In diesem Bereich besitzen die Rahmenhauptrohre 20 auch Lagerbohrungen 32 zur Aufnahme eines in dieser Figur nicht gezeichneten Längslenkers 52, der das Vorderrad 2 um eine angedeutet gezeichnete Fahrzeugquerachse 33 schwenkbar führt. Der Längslenker 52 wird von den Lagerbohrungen 32 zwischen den beiden Rahmenhauptrohren 20 aufgenommen.

Ein in dieser Figur nicht gezeichnetes Deformationselement 51 (Figur 3) über dem Längslenker 52 stützt sich nicht nur an den Rahmenhauptrohren 20, sondern zusätzlich auch an den weiteren Rahmenelementen 23 ab, die hinter dem in dieser Figur nicht gezeichneten Vorderrad 2 im wesentlichen nach vorne oben gerichtet verlaufen und sich bis über die Deformationseinrichtung hinaus erstrecken.

Über dem Längslenker 52 (Figur 3), im Bereich der Verbindung 30, beginnt die sich nach hinten oben, vor und dann über den Fahrer 5 erstreckende Schutzeinrichtung für den Fahrer 5, bestehend aus den Holmen 9, 10, die durch eine in Fahrzeugquerrichtung verlaufende Querstrebe 34 miteinander verbunden sind.

Zwischen den Holmen 9, 10 befindet sich die in dieser Figur nicht gezeichnete Windschutzscheibe 12. Hinter dem Fahrer sind die Holme 9, 10 des Oberteils 19 der Schutzeinrichtung, die sich über und vor dem Fahrer 5 befindet, nach unten verlaufend gerichtet. Sie gehen über in das Rückenteil 18 der Schutzeinrichtung, das fest mit dem Fahrzeugrahmen verbunden ist und hinter dem Fahrer 5 verläuft. Das Rückenteil 18 ist im hinteren Bereich des Sitzrahmenteils 25 befestigt. Die Holme 35, 36 des Rückenteils 18 sind zu einer Längsmittenebene des Fahrzeugrahmens gegenüber den Holmen 9, 10 hin eingezogen. Das deshalb, um Platz für die Beine eines in dieser Figur nicht gezeichneten Sozius 47 (Figur 3) zu schaffen, für den eine in dieser Figur nicht gezeichnete Hinterradverkleidung 56 (Figur 1) in ihrem oberen Bereich als Sitz ausgebildet ist. Diese Hinterradverkleidung ist an ergänzenden Rahmenteilen 37, 38 angebracht, wobei in ihr ein Stauraum ausgebildet sein kann.

Die ergänzenden Rahmenteile 37, 38 sind mit dem Sitzrahmenteil 25 und dem Rückenteil 18 der Schutzeinrichtung, desweiteren mit den zusätzlichen Rahmenelementen 21 auf jeder Seite des Zweirads über ein Knotenelement 39 verbunden. Sie erstrecken sich hinter dem Fahrer 5 nach hinten über das in dieser Figur nicht gezeichnete Hinterrad 3. Anstatt dem Sozius 47 (Figur 3) ist auch vorgesehen, daß an der Hinterradverkleidung 56 (Figur 1) oder an den ergänzenden Rahmenteilen 37, 38 mindestens ein nicht gezeichneter abnehmbarer Stauraum befestigbar ist.

Als weitere Schutzeinrichtungen für den Fahrer 5 sind am Fahrzeugrahmen sich jeweils über die seitliche Kontur hinaus erstreckende Schulterschutzbügel 13 und Beckenschutzbügel 14 angebracht. Die Beckenschutzbügel 14 verbinden das Sitzrahmenteil 25 mit dem Rückenteil 18, während die Schulterschutzbügel 13 am Rückenteil 18 angebracht sind. Dabei sind Rückenteil 18 und Oberteil 19 der Schutzeinrichtung für den Fahrer 5 über die Umlenkbügel 17 für die Sicherheitsgurtbänder 15, 16 (Figur 1) verbunden. Auf die Weise, daß die Holme 9, 10 in Aufnahmerohre 40, 41 des Rückenteils 18 eingesteckt sind und die Umlenkbügel 17 jeweils durch eine Querbohrung 42 durch die Aufnahmerohre 40, 41 und die Holme 9, 10 hindurchgesteckt sind. Durch diese formschlüssige Steckverbindung wird der jeweilige Holm 9, 10 im jeweiligen Aufnahmerohr 40, 41 des Rückenteils 18 festgelegt. Ein anderes Ende des Umlenkbügels 17 ist am jeweiligen Aufnahmerohr 40, 41 zur Festlegung des Umlenkbügels 17 angeschraubt. Bei einer verformenden Kraftwirkung auf einen Schulterschutzbügel 13 legt sich dieser an den Umlenkbügel 17 an, was zu einer Versteifung des Schulterschutzbügels 13 führt. Durch Abstimmung der Drahtstärke kann beim Umlenkbügel 17 eine Gurtkraftbegrenzung durch dessen gezielte Verformung realisiert werden.

Eine in dieser Figur nicht gezeichnete gefederte Hinterradführung für mindestens ein Hinterrad 3 (Figur 1) wird in weiteren Lagerbohrungen 43 in den zusätzlichen Rahmenelementen 21 aufgenommen. Die weiteren Lagerbohrungen 43 können aber auch an der Verbindung, Knotenelement 60, der zusätzlichen Rahmenelemente 21 mit den weiteren Rahmenelementen 23 und den Rahmenhauptrohren 20 angebracht sein (Figur 3). Die gefederte Hinterradführung kann unter Umständen auch aus einer Triebsatzschwinge bestehen, bei der der Motor 22 (Figur 3) mit der Hinterradführung federnd am Fahrzeugrahmen angebracht ist.

Dies wird in Figur 3 dargestellt. Eine Triebsatzschwinge 44 mit Hinterrad 3 und Motor 22 ist, abgestützt durch ein nicht gezeichnetes Feder- und/oder Dämpferelement, an der Verbindung, Knotenelement 60, der weiteren Rahmenelemente 23 mit den Rahmenhauptrohren 20 und den zusätzlichen Rahmenelementen 21 um eine weitere Querachse des Fahrzeugs drehbar angebracht. Dazu dienen unter anderem die weiteren Lagerbohrungen 43 am Knotenelement 60. Der Motor 22 befindet sich im wesentlichen vor dem Hinterrad 3 und unterhalb der Sitzeinrichtung für den Fahrer 5.

Über dem Hinterrad 3 sitzt auf einer in ihrem oberen Bereich als Sitz ausgebildeten in dieser Figur nicht gezeichneten Hinterradverkleidung 56 (Figur 1) ein Sozius 47. Zwischen Fahrer 5 und Sozius 47 verläuft der Rückenteil 18 der Schutzeinrichtung für den Fahrer 5, die im Bereich der Beine 48 des Sozius 47 zur Fahrzeugmitte hin eingezogen ist. Die Schutzeinrichtung für den Fahrer 5 erstreckt sich in ihrem weiteren Verlauf über diesen hinweg, nach vorne unten bis zu einer Verbindung 30 an der diese in Klemmschellen 49, 50 (Figur 2) reibschlüssig aufgenommen ist. Unterhalb der Verbindung 30 und vor der Lenkeinrichtung 11 befindet sich das Deformationselement 51. Es erstreckt sich über das Vorderrad 2 in einer Höhe über dem Gesamtschwerpunkt des Fahrzeugs, was bewirkt, daß sich dieses bei einem Frontalaufprall nicht überschlägt.

Die gefederte Vorderradführung über den Längslenker 52 und den Aufnahmekörper 31 der Lenkeinrichtung 11 ist in der Lage, wie das Deformationselement 51, bei einem Aufprall sehr große Kräfte abzubauen und in die Rahmenhauptrohre 20 weiterzuleiten.

Der Längslenker 52 wird über ein Federbein 53 (gestrichelt gezeichnet, da nicht sichtbar) mit Dämpfungseinrichtung am Fahrzeugrahmen abgestützt. Das über Teleskoprohre 54 geführte Vorderrad 2 ist über eine untere Gabelbrücke 55 zwischen den Teleskoprohren 54 über den Längslenker 52 federnd abgestützt.

Die Rahmenhauptrohre 20, weiteren Rahmenelemente 23, zusätzlichen Rahmenelemente 21 das Sitzrahmenteil 25, Rückenteil 18 und die ergänzenden Rahmenteile 37, 38 sind Strangprofile, die durch Knotenelemente 39, 60 verbunden sind. Dabei wäre es auch möglich, andere Verbindungsstellen zwischen den Strangprofilen, wie zum Beispiel zwischen den zusätzlichen Rahmenelementen 24 und dem Sitzrahmenteil 25, ebenfalls über Knotenelemente zu verbinden. Im Beispiel könnte dann die Sitzrampe 26 als Knotenelement ausgebildet sein. Als Werkstoff für die Strangprofile wird vorzugsweise Leichtmetall verwendet. Die Knotenelemente sind ebenfalls vorzugsweise aus Leichtmetall, gegossen oder geschmiedet.

## Patentansprüche

1. Fahrzeugrahmen mit Durchstieg (4), insbesondere für ein Zweirad, für ein Fahrzeug mit einer gefederten Vorderradführung, einer Lenkeinrichtung (11) für mindestens ein Vorderrad (2), einer gefederten Hinterradführung für mindestens ein Hinterrad (3), mindestens einer Sitzeinrichtung für einen Fahrer (5) und mindestens einer vor, über und hinter dem Fahrer (5) sich erstreckenden Schutzeinrichtung, die so gestaltet ist, dass sich für den Fahrer (5) ein seitlich offener, das Durchsteigen ermöglichender Käfig ergibt, einem Motor (22), der im wesentlichen vor oder im Hinterrad (3) und unterhalb der Sitzeinrichtung angebracht ist, wobei mindestens ein, sich im wesentlichen in Fahrzeuglängsrichtung erstreckendes, tragendes Rahmenhauptelement von hinten unten, nahe dem Motor (22), nach vorne oben, nahe der Lenkeinrichtung (11), verläuft, wobei als Rahmenhauptelement zwei Rahmenhauptrohre (20) vorgesehen sind und dass auf jeder Seite unterhalb des Rahmenhauptelements mindestens ein, mindestens abschnittsweise im wesentlichen parallel zur Aufstandsfläche des Fahrzeugs verlaufendes, weiteres Rahmenelement (23) vorgesehen ist, das eine Aufstellfläche (6) für den jeweiligen Fuß (29) des Fahrers (5) bildet,
**dadurch gekennzeichnet, dass** die beiden Rahmenhauptrohre (20) links und rechts seitlich der Fahrzeugmittenebene parallel verlaufen.

2. Fahrzeugrahmen nach Anspruch 1,
**dadurch gekennzeichnet, dass** der Motor (22) mit der Hinterradführung federnd am Fahrzeugrahmen angebracht ist.

3. Fahrzeugrahmen nach Anspruch 1 oder 2,
**dadurch gekennzeichnet, dass** die beiden Rahmenhauptrohre (20) vorne verbunden sind mindestens durch einen Aufnahmekörper (31) für die Lenkeinrichtung (11) und/oder für ein Federbein (53).

4. Fahrzeugrahmen nach einem der Ansprüche 1 bis 3,
**dadurch gekennzeichnet, dass** das Vorderrad (2) unter anderem durch mindestens einen an dem Rahmenhauptelement angebrachten, um eine Fahrzeugquerachse (33) schwenkbaren Längslenker (52) geführt wird.

5. Fahrzeugrahmen nach Anspruch 4,
**dadurch gekennzeichnet, dass** sich der Längslenker (52) nach hinten bis zwischen die beiden Rahmenhauptrohre (20) erstreckt und dort in diesen schwenkbar gelagert ist.

6. Fahrzeugrahmen nach einem der Ansprüche 1 bis 5,
**dadurch gekennzeichnet, dass** zusätzliche Rahmenelemente (21, 24) vorgesehen sind, die im wesentlichen vom mittleren und/oder vom hinteren Bereich des Rahmenhauptelements ausgehend, schräg nach hinten oben verlaufen und mit dem Rahmenhauptelement und/oder den weiteren Rahmenelementen (23) verbunden sind, um mindestens die Sitzeinrichtung zu tragen.

7. Fahrzeugrahmen nach Anspruch 6,
**dadurch gekennzeichnet, dass** die Sitzeinrichtung aus einem Sitzrahmenteil (25), das die zusätzlichen Rahmenelemente (21, 24) im wesentlichen horizontal verbindet, aus einer Sitzrampe (26), die mit den zusätzlichen Rahmenelementen (21, 24) und/oder dem Sitzrahmenteil (25) verbunden ist und sich im Schrittbereich des Fahrers (5) nach oben erstreckt und aus einem Sitz (7) besteht.

8. Fahrzeugrahmen nach Anspruch 6 oder 7,
**dadurch gekennzeichnet, dass** am Rahmenhauptelement oder an den vom hinteren Bereich des Rahmenhauptelements ausgehenden zusätzlichen Rahmenelementen (21) oder an deren Verbindung mit dem Rahmenhauptelement und/oder den weiteren Rahmenelementen (23) die gefederte Hinterradführung angebracht ist.

9. Fahrzeugrahmen nach einem der Ansprüche 1 bis 8,
**dadurch gekennzeichnet, dass** sich mindestens an dem Rahmenhauptelement eine über dem Vorderrad (2) angebrachte Deformationseinrichtung abstützt.

10. Fahrzeugrahmen nach Anspruch 9,
**dadurch gekennzeichnet, dass** die weiteren Rahmenelemente (23) hinter dem Vorderrad (2) im wesentlichen nach oben gerichtet verlaufen und sich bis über die Deformationseinrichtung hinaus erstrecken.

11. Fahrzeugrahmen nach einem der Ansprüche 1 bis 10,
**dadurch gekennzeichnet, dass** die weiteren Rahmenelemente (23) im vorderen Bereich des Fahrzeuges mit dem Rahmenhauptelement direkt oder über den Aufnahmekörper (31) für die Lenkeinrichtung (11) und/oder für das Federbein (53) und/oder miteinander verbunden sind.

12. Fahrzeugrahmen nach einem der Ansprüche 9 bis 11,
**dadurch gekennzeichnet, dass** sich die Deformationseinrichtung an den weiteren Rahmenelementen (23) abstützt.

13. Fahrzeugrahmen nach einem der Ansprüche 9 bis 12,
**dadurch gekennzeichnet, dass** die weiteren Rahmenelemente (23) über der Deformationseinrichtung miteinander verbunden sind.

14. Fahrzeugrahmen nach einem der Ansprüche 1 bis 13,
**dadurch gekennzeichnet, dass** die sich vor, über und hinter dem Fahrer (5) erstreckende Schutzeinrichtung hinter dem Fahrer (5) an den zusätzlichen Rahmenelementen (21) und/oder an dem Sitzrahmenteil (25) und/oder an deren Verbindung, einem Knotenelement (39), und vor dem Fahrer (5) an den weiteren Rahmenelementen (23) und/oder an deren Verbindung (30) und/oder am Rahmenhauptelement angebracht ist.

15. Fahrzeugrahmen nach einem der Ansprüche 1 bis 14,
**dadurch gekennzeichnet, dass** die Schutzeinrichtung mindestens aus zwei, auf jeweils einer Seite des Fahrzeugs verlaufenden, untereinander verbundenen Holmen (9, 10, 35, 36) besteht.

16. Fahrzeugrahmen nach Anspruch 15,
**dadurch gekennzeichnet, dass** an jedem Holm (9, 10, 35, 36) jeweils ein Schulterschutzbügel (13) angebracht ist, der die Kontur mindestens der Schutzeinrichtung zur jeweiligen Seite hin überragt.

17. Fahrzeugrahmen nach einem der Ansprüche 1 bis 16,
**dadurch gekennzeichnet, dass** an jedem Holm (35, 36) und/oder an den zusätzlichen Rahmenelementen (21, 24) und/oder an dem Sitzrahmenteil (25) und/oder an dem Knotenelement (39) zur Seite hin ein Beckenschutzbügel (14) angebracht ist, der die Kontur mindestens der Schutzeinrichtung zur Seite hin überragt.

18. Fahrzeugrahmen nach einem der Ansprüche 1 bis 17,
**dadurch gekennzeichnet, dass** der Sitz (7) zusätzlich an der Schutzeinrichtung befestigt ist.

19. Fahrzeugrahmen nach einem der Ansprüche 1 bis 18,
**dadurch gekennzeichnet, dass** für den Fahrer (5) eine Sicherheitsgurteinrichtung vorhanden ist, die am Fahrzeugrahmen und/oder am Sitz (7) befestigt ist.

20. Fahrzeugrahmen nach Anspruch 19,
**dadurch gekennzeichnet, dass** die Sicherheitsgurteinrichtung eine Umlenkeinrichtung für mindestens ein Sicherheitsgurtband (15, 16) besitzt, die an der Schutzeinrichtung angebracht ist und die sich bei verformender Belastung an dieser abstützt.

21. Fahrzeugrahmen nach einem der Ansprüche 1 bis 20,
**dadurch gekennzeichnet, dass** die Schutzeinrichtung mindestens zweigeteilt ist, in ein fest mit dem Fahrzeugrahmen verbundenes Rückenteil (18) hinter dem Fahrer (5) und ein am Fahrzeugrahmen lösbar befestigtes Oberteil (19), mindestens über und vor dem Fahrer (5).

22. Fahrzeugrahmen nach Anspruch 21,
**dadurch gekennzeichnet, dass** das Oberteil (19) durch die Umlenkeinrichtung mit dem Rückenteil (18) formschlüssig und durch vome am Fahrzeugrahmen angebrachte Klemmschellen (49, 50) mit dem Fahrzeugrahmen reib- und/oder formschlüssig verbunden ist.

23. Fahrzeugrahmen nach einem der Ansprüche 1 bis 22,
**dadurch gekennzeichnet, dass** mindestens im Bereich vor dem Fahrer (5) mindestens zwischen den beiden Holmen (9, 10) der Schutzeinrichtung eine Windschutzscheibe (12) angebracht ist.

24. Fahrzeugrahmen nach einem der Ansprüche 1 bis 23,
**dadurch gekennzeichnet, dass** an den zusätzlichen Rahmenelementen (21) und/oder an der Schutzeinrichtung und/oder an der Sitzeinrichtung hinter dem Fahrer (5) sich nach hinten über das Hinterrad (3) erstreckende ergänzende Rahmenteile (37, 38) angebracht sind.

25. Fahrzeugrahmen nach Anspruch 24,
**dadurch gekennzeichnet, dass** an den ergänzenden Rahmenteilen (37, 38) eine Hinterradverkleidung (56) befestigt ist, in der ein Stauraum ausgebildet ist.

26. Fahrzeugrahmen nach einem der Ansprüche 24 oder 25,
**dadurch gekennzeichnet, dass** an den ergänzenden Rahmenteilen (37, 38) eine Hinterradverkleidung (56) befestigt ist, die in ihrem oberen Bereich als Sitz für einen Sozius (47) ausgebildet ist.

27. Fahrzeugrahmen nach einem der Ansprüche 24 bis 26,
**dadurch gekennzeichnet, dass** an den ergänzenden Rahmenteilen (37, 38) eine Hinterradverkleidung (56) befestigt ist und dass an dieser und/oder an den ergänzenden Rahmenteilen (37, 38) mindestens ein abnehmbarer Stauraum befestigbar ist.

28. Fahrzeugrahmen nach einem der Ansprüche 15 bis 27,
**dadurch gekennzeichnet, dass** die Holme (35, 36) des Rückenteils (18) zur Längsmittenebene des Fahrzeugs hin mindestens im Bereich des Soziussitzes eingezogen sind.

29. Fahrzeugrahmen nach einem der Ansprüche 1 bis 28,
**dadurch gekennzeichnet, dass** bestimmte Rahmenelemente (20, 23, 21, 24, 25, 26, 37, 38) Strangprofile, insbesondere aus Leichtmetall, sind.

30. Fahrzeugrahmen nach Anspruch 29,
**dadurch gekennzeichnet, dass** die Strangprofile zumindest teilweise durch Knotenelemente (39, 60) verbunden sind.

31. Fahrzeugrahmen nach Anspruch 30,
**dadurch gekennzeichnet, dass** der Aufnahmekörper (31) für die Lenkeinrichtung (11) und/oder für das Federbein (53) und/oder die Sitzrampe (26) und/oder die Verbindungen der Rahmenelemente (20, 21, 23, 24, 25, 37, 38) als Knotenelemente (39, 60) ausgebildet sind.

## Claims

1. A vehicle frame with a climb-through opening (4), especially for a moped, a vehicle comprising a sprung front wheel guide, a steering device (11) for at least one front wheel (2), a sprung wheel guide for at least one rear wheel (3), at least one seat device for the driver (5) and at least one protective device extending in front of, over and behind the driver (5) and so designed that the driver (5) has a laterally open cage into which he can climb, also comprising an engine (22) disposed substantially in front of or in the rear wheel (3) and under the seat device, wherein at least one load-supporting main frame element substantially in the longitudinal direction of the vehicle extends from bottom rear, near the engine (22), forward and upward near the steering device (11), wherein the main frame element comprises two tubes (20) and at least one other frame element (23), extending substantially parallel, at least in places, to the base of the vehicle, is provided on each side under the main frame element and forms a rest (6) for a respective foot (29) of the driver (5),
**characterised in that** the two main frame pipes (20) extend parallel to left arid right of the centre plane of the vehicle.

2. A vehicle frame according to claim 1,
**characterised in that** the engine (22) and the rear wheel guide are spring-mounted on the vehicle frame.

3. A vehicle frame according to claim 1 or claim 2,
**characterised in that** the two main frame tubes (20) are connected at the front and at least by one member (31) for receiving the steering device (11) and/or for receiving a spring leg (53).

4. A vehicle frame according to any of claims 1 to 3,
**characterised in that** the front wheel (2) is guided inter alia by at least one longitudinal control lever (52) mounted on the main frame element and pivotable around a transverse axis (33) of the vehicle.

5. A vehicle frame according to claim 4,
**characterised in that** the longitudinal control lever (52) extends downwards to between the two main frame tubes (20) and is pivotably mounted therein.

6. A vehicle frame according to any of claims 1 to 5,
**characterised in that** additional frame elements (21, 24) are provided and extend substantially from the centre and/or from the rear region of the main frame element obliquely backwards and upwards and are connected to the main frame element and/or to the other frame elements (23) so as at least to bear the seat device.

7. A vehicle frame according to claim 6,
**characterised in that** the seat device comprises a seat frame part (25) which substantially horizontally connects the additional frame elements (21, 24), and also comprises a ramp (26) which is connected to the additional frame elements (21, 24) and/or to the seat frame part (25) and extends upwards in the foot region of the driver (5) and comprises a seat (7).

8. A vehicle frame according to claim 6 or claim 7,
**characterised in that** the sprung rear wheel guide is disposed on the main frame element or on the additional frame elements (21) extending from the rear region of the main frame element or on the connection between them and the main frame element and/or the other frame elements (23).

9. A vehicle frame according to any of claims 1 to 8,
**characterised in that** at least one deformation device disposed above the front wheel (2) is braced against the main frame element.

10. A vehicle frame according to claim 9,
**characterised in that** the other frame elements (23) behind the front wheel (2) extend substantially upwards and above the deformation device.

11. A vehicle frame according to any of claims 1 to 10,
**characterised in that** the other frame elements (23) in the front region of the vehicle are connected to the main frame element directly or via the member (31) for receiving the steering means (11) and/or for the spring leg (53) and/or to one another.

12. A vehicle frame according to any of claims 9 to 11,
**characterised in that** the deformation device is braced against the other frame elements (23).

13. A vehicle frame according to any of claims 9 to 12,
**characterised in that** the other frame elements (23) are interconnected via the deformation device.

14. A vehicle frame according to any of claims 1 to 13,
**characterised in that** the protective device extending in front of, over and behind the driver (5) is mounted behind the driver (5) on the additional frame elements (21) and/or on the seat frame part (25) and/or on the connection between them, i.e. a junction element (39), and is disposed in front of the driver (5) on the other frame elements (23) and/or on the connection (30) between them and/or on the main frame element.

15. A vehicle frame according to any of claims 1 to 14,
**characterised in that** the protective device comprises at least two longitudinal members (9, 10, 35, 36) connected to one another and each extending on one side of the vehicle.

16. A vehicle frame according to claim 15,
**characterised in that** a shoulder-protecting curved member (13) is disposed on each longitudinal member (9, 10, 35, 36) and projects to the respective side beyond the contour of at least the protective device.

17. A vehicle frame according to any of claims 1 to 16,
**characterised in that** a pelvis-protecting curved member (14) projecting to the side beyond the contour of at least the protecting device is provided on each longitudinal member (35, 36) and/or on the additional frame elements (21, 24) and/or on the seat frame part (25) and/or on the junction element (39).

18. A vehicle frame according to any of claims 1 to 17,
**characterised in that** the seat (7) is additionally fastened to the protective device.

19. A vehicle frame according to any of claims 1 to 18,
**characterised in that** a safety-belt device is provided for the driver (5) and is fastened to the vehicle frame and/or to the seat (7).

20. A vehicle frame according to claim 19,
**characterised in that** the safety-belt device comprises a guide device for at least one safety-belt strap (15, 16), mounted on the protective device and braced against it under a deforming load.

21. A vehicle frame according to any of claims 1 to 20,
**characterised in that** the protective device is divided at least in two, i.e. into a back part (18) firmly connected to the vehicle frame behind the driver (5) and into a top part releasably connected to the vehicle frame, at least above and in front of the driver (5).

22. A vehicle frame according to claim 21,
**characterised in that** the top part (19) is positively connected to the back part (18) by the guide device and frictionally and/or positively connected to the vehicle frame by clamping straps (49, 50) disposed at the front on the vehicle frame.

23. A vehicle frame according to any of claims 1 to 22,
**characterised in that** a windscreen (12) is disposed at least in the region in front of the driver (5), at least between the two longitudinal members (9, 10) of the protective device.

24. A vehicle frame according to any of claims 1 to 23,
**characterised in that** supplementary frame parts (37, 38) extending backwards over the rear wheel (3) are disposed on the additional frame elements (21) and/or on the protective device and/or on the seat device behind the driver (5).

25. A vehicle frame according to claim 24,
**characterised in that** a rear-wheel cover (56) in which a luggage compartment is formed, is fastened to the supplementary frame parts (37, 38).

26. A vehicle frame according to claim 24 or claim 25, **characterised in that** a rear wheel cover (56) is fastened to the supplementary frame parts (37, 38) and is in the form of a seat for a pillion rider (47) in its upper region.

27. A vehicle frame according to any of claims 24 to 26,
**characterised in that** a rear wheel cover (56) is fastened to the supplementary frame parts (37, 38) and at least one removable luggage container is fastenable to it and/or to the supplementary frame parts (37, 38).

28. A vehicle frame according to any of claims 15 to 27,
**characterised in that** the longitudinal members (35, 36) of the back part (18) are pulled inwards towards the central longitudinal plane of the vehicle at least in the neighbourhood of the pillion seat.

29. A vehicle frame according to any of claims 1 to 28,
**characterised in that** some frame elements (20, 23, 21, 24, 25, 26, 37, 38) are extruded profiles, especially of light metal.

30. A vehicle frame according to claim 29,
**characterised in that** the extruded profiles are at least partly connected by junction elements (39, 60).

31. A vehicle frame according to claim 30,
**characterised in that** the receiving members (31) for the steering device (11) and/or for the spring leg (53) and/or the seat ramp (26) and/or the connections of the frame elements (20, 21, 23, 24, 25, 37, 38) are junction elements (39, 60).

## Revendications

1. Châssis de véhicule comportant un passage d'accès (4), notamment pour un véhicule à deux roues, comprenant un guidage de roue avant suspendu, une installation de direction (11) pour au moins une roue avant (2), un guidage de roue arrière suspendu pour au moins une roue arrière (3), au moins une installation de siège pour un conducteur (5) et au moins une installation de protection s'étendant par-dessus et derrière le conducteur (5), cette installation étant conçue pour réaliser une cage latéralement ouverte pour le conducteur, permettant l'accès par passage, un moteur (22) qui se trouve principalement devant ou au niveau de la roue arrière (3), en dessous de l'installation de siège, avec au moins un élément principal de châssis porteur, s'étendant essentiellement dans la direction longitudinale du véhicule, de l'arrière en bas à proximité du moteur (22) vers l'avant en haut à proximité de l'installation de direction (11), et dont l'élément principal de châssis est constitué par deux tubes principaux (20), alors que
de chaque côté, en dessous de l'élément principal de châssis, au moins un autre élément de châssis (23) s'étend au moins par segment essentiellement parallèlement à la surface d'appui du véhicule, cet élément (23) formant une surface d'appui (6) pour chaque pied (29) du conducteur (5),
**caractérisé en ce que**
les deux tubes principaux (20) du châssis sont disposés parallèlement à gauche et à droite, à côté du plan médian du véhicule.

2. Châssis de véhicule selon la revendication 1,
**caractérisé en ce que**
le moteur (22) est installé avec le guidage de roue arrière de manière suspendue au châssis.

3. Châssis de véhicule selon l'une quelconque des revendications 1 ou 2,
**caractérisé en ce que**
les deux tubes principaux (20) sont reliés à l'avant par au moins un organe de réception (31) de l'installation de direction (11) et/ou d'une jambe élastique (53).

4. Châssis de véhicule selon l'une quelconque des revendications 1 à 3,
**caractérisé en ce que**
la roue avant (2) est entre autre guidée par au moins un bras longitudinal (52) relié à l'élément principal du châssis et monté pivotant autour d'un axe transversal (33) par rapport au véhicule.

5. Châssis de véhicule selon la revendication 4,
**caractérisé en ce que**
le bras longitudinal (52) s'étend vers l'arrière jusqu'entre les deux tubes principaux (20) pour y être monté de manière pivotante sur celui-ci.

6. Châssis de véhicule selon l'une quelconque des revendications 1 à 5,
**caractérisé en ce qu'**
il comporte des éléments de châssis supplémentaires (21, 24) dirigés essentiellement en biais vers l'arrière et vers le haut en partant de la zone centrale et/ou de la zone arrière de l'élément principal de châssis, et reliés à l'élément principal et/ou aux autres éléments de châssis (23) pour porter au moins une installation de siège.

7. Châssis de véhicule selon la revendication 6,
**caractérisé en ce que**
l'installation de siège se compose d'une partie de châssis de siège (25) reliant les éléments de châssis supplémentaires (21, 24) essentiellement de manière horizontale, d'une rampe de siège (26) reliée aux éléments de châssis supplémentaires (21, 24) et/ou à la partie de châssis de siège (25) et qui remonte au niveau du siège du conducteur, et se compose d'un siège (7).

8. Châssis de véhicule selon l'une quelconque des revendications 6 ou 7,
**caractérisé en ce que**
l'élément principal du châssis ou les éléments de châssis supplémentaires (21) qui partent de la zone arrière de l'élément principal ou leur liaison avec l'élément principal du châssis et/ou les autres éléments de châssis (23) portent le guidage suspendu de la roue arrière.

9. Châssis de véhicule selon l'une quelconque des revendications 1 à 8,
**caractérisé en ce qu'**
une installation déformable prévue au-dessus de la roue avant (2) arrive au moins jusqu'à l'élément principal de châssis.

10. Châssis de véhicule selon la revendications 9,
**caractérisé en ce que**
les autres éléments de châssis (23) passent essentiellement derrière la roue avant (2) vers le haut et s'étendent jusqu'au-delà de l'installation déformable.

11. Châssis de véhicule selon l'une quelconque des revendications 1 à 10,
**caractérisé en ce que**
les autres éléments de châssis (23) sont reliés dans la zone avant du véhicule à l'élément principal de châssis, directement ou par l'organe de réception (31) de l'installation de direction (11) et/ou de la jambe élastique (53), et/ou ces éléments sont reliés entre eux.

12. Châssis de véhicule selon l'une quelconque des revendications 9 à 11,
**caractérisé en ce que**
l'installation déformable s'appuie sur les autres éléments de châssis (23).

13. Châssis de véhicule selon l'une quelconque des revendications 9 à 12,
**caractérisé en ce que**
les autres éléments de châssis (23) sont reliés par l'intermédiaire de l'installation déformable.

14. Châssis de véhicule selon l'une quelconque des revendications 1 à 13,
**caractérisé en ce que**
l'installation de protection qui s'étend devant par-dessus et derrière le conducteur (5), est reliée derrière le conducteur (5) aux éléments de châssis supplémentaires (21) et/ou à la partie de châssis de siège (25) et/ou à leur liaison, c'est-à-dire à un élément de noeud (39) et devant le conducteur (5) cette installation est reliée aux autres éléments de châssis (23) et/ou à leur liaison (30) et/ou à l'élément principal de châssis.

15. Châssis de véhicule selon l'une quelconque des revendications 1 à 14,
**caractérisé en ce que**
l'installation de protection se compose d'au moins deux arceaux (9, 10, 35, 36) reliés entre eux et passant de chaque côté du véhicule.

16. Châssis de véhicule selon la revendication 15,
**caractérisé par**
un arceau de protection des épaules (13) relié à chaque arceau (9, 10, 35, 36), cet arceau dépassant de chaque côté le contour au moins de l'installation de protection.

17. Châssis de véhicule selon l'une quelconque des revendications 1 à 16,
**caractérisé par**
un arceau de protection du bassin (14) prévu sur chaque arceau (35, 36) et/ou sur les éléments de châssis supplémentaires (21, 24) et/ou sur la partie de châssis de siège (25), cet arceau dépassant latéralement le contour au moins de l'installation de protection.

18. Châssis de véhicule selon l'une quelconque des revendications 1 à 17,
**caractérisé en ce que**
le siège (7) est en outre fixé à l'installation de protection.

19. Châssis de véhicule selon l'une quelconque des revendications 1 à 18,
**caractérisé par**
une installation à ceintures de sécurité pour le conducteur (5), cette installation étant fixée au châssis du véhicule et/ou au siège (7).

20. Châssis de véhicule selon la revendication 19,
**caractérisé en ce que**
l'installation à ceintures de sécurité comporte une installation de déviation pour au moins une ceinture de sécurité (15, 16), cette installation de déviation étant prévue sur l'installation de protection et s'appuie contre celle-ci sous l'effet d'une charge déformante.

21. Châssis de véhicule selon l'une quelconque des revendications 1 à 20,
**caractérisé en ce que**
l'installation de protection est formée d'au moins deux parties, l'une qui est la partie arrière (18) reliée au châssis du véhicule, derrière le conducteur (5) et l'autre, la partie supérieure (19) fixée de manière amovible au châssis du véhicule, au moins au-dessus et devant le conducteur (5).

22. Châssis de véhicule selon la revendication 21,
**caractérisé en ce que**
la partie supérieure (19) est reliée par une liaison de forme par l'installation de renvoi à la partie arrière (18) et par une liaison de friction et/ou de forme au châssis du véhicule par des colliers de serrage (49, 50) installés à l'avant du châssis du véhicule.

23. Châssis de véhicule selon l'une quelconque des revendications 1 à 22,
**caractérisé par**
un pare-brise (12) installé au moins dans la zone devant le conducteur (5), au moins entre les deux arceaux (9, 10).

24. Châssis de véhicule selon l'une quelconque des revendications 1 à 23,
**caractérisé en ce que**
des parties de châssis complémentaires (37, 38), s'étendant vers l'arrière par-dessus la roue arrière (3), sont montées sur les éléments de châssis supplémentaires (21) et/ou sur l'installation de protection et/ou sur l'installation de siège derrière le conducteur (5).

25. Châssis de véhicule selon la revendication 24,
**caractérisé par**
un habillage de roue arrière (56) fixé aux parties de châssis complémentaires (37, 38), un volume de rangement étant prévu dans ces parties de châssis.

26. Châssis de véhicule selon l'une quelconque des revendications 24 ou 25,
**caractérisé par**
un habillage de roue arrière (56) fixé aux parties de châssis (37, 38) complémentaires, et ont la partie supérieure de cet habillage est réalisée en forme de siège pour un passager (47).

27. Châssis de véhicule selon l'une quelconque des revendications 24
à 26,
**caractérisé par**
un habillage de roue arrière (56) fixé aux parties de châssis complémentaires (37, 38), avec au moins un volume de rangement amovible fixé à cet habillage de roue arrière et/ou aux parties de châssis complémentaires (37, 38).

28. Châssis de véhicule selon l'une quelconque des revendications 15 à 27,
**caractérisé en ce que**
les arceaux (35, 36) de la partie arrière (18) sont rentrés par rapport au plan médian longitudinal du véhicule, au moins au niveau du siège du passager.

29. Châssis de véhicule selon l'une quelconque des revendications 1 à 28,
**caractérisé en ce que**
certains éléments de châssis (20, 23, 21, 24, 25, 26, 37, 38) sont des profilés extrudés, en particulier en métal léger.

30. Châssis de véhicule selon la revendication 29,
**caractérisé en ce que**
les profilés extrudés sont reliés au moins partiellement par des éléments de noeuds (39, 60).

31. Châssis de véhicule selon la revendication 30,
**caractérisé en ce que**
l'organe de réception (31) de l'installation de direction (11) et/ou de la jambe élastique (53) et/ou de la rampe de siège (56) et/ou les liaisons des éléments de châssis (20, 21, 23, 24, 25, 37, 38) sont constitués par des éléments de noeuds (39, 60).
